# EUROPEAN PATENT SPECIFICATION

(11) **EP 3 922 102 B1**
(45) Date of publication and mention of the grant of the patent: **02.08.2023**
(21) Application number: 20179818.8
(22) Date of filing: 12.06.2020
(51) Int. Cl.: A21C 9/08, B65G 47/00

(54) **TRANSSHIPMENT DEVICE FOR DOUGH PIECES**
UMLADUNGSVORRICHTUNG FÜR TEIGSTÜCKE
DISPOSITIF DE TRANSBORDEMENT DE PÂTONS

(43) Date of publication of application: 15.12.2021
(73) Proprietor: Radie B.V., 4104 BC Culemborg (NL)
(72) Inventor: VAN BLOKLAND, Johannes Josephus Antonius, 4104 BC Culemborg (NL)
(74) Representative: IP Maison

(56) References cited:
- AT-B1- 508 652
- DE-A1-102007 003 385
- GB-A- 2 167 031
- US-A1- 2018 308 308

## Description

The present invention relates to a transshipment device for dough pieces, in particular a device for receiving dough pieces and placing them on carriers for further handling, more in particular for being stored in a rack for proofing or being baked.

Devices for that purpose are known in the art. The Austrian patent publication AT508652B1 describes a robot system for manipulating carriers for dough pieces. The system can amongst others be used for displacing carriers from a carrier loading location, and putting them in a rack.

Also DE102007003385A1 discloses a transshipment device according to the prior art.

A first disadvantage of this robot system however is that only one tray can be handled at the time. A straighforward disadvantage is that the throughput of such system remains rather low, while the system itself is quite complex. Evidently, a higher throughput or handling speed of dough products can be obtained by using multiple equal systems in parallel, but such solution would demand an unacceptable footprint in a bakery.

A second disadvantage is that the system according to the prior art forms a bottleneck in a continuous production process, since it handles carriers one by one, and can't continue when for instance a rack is full.

It is therefore a goal of the present invention, to provide a system that allows a higher throughput with the least of complexity, and with dimensions that allow a practical implementation.

The invention thereto proposes a transshipment device for dough pieces, comprising at least one carrier picking location, for positioning empty carriers to be picked, at least one carrier loading location, for loading a picked carrier with dough pieces, at least one carrier deposition location, for depositing a carrier loaded with dough pieces, and a number of movable grippers for picking, moving and depositing carriers, wherein each gripper is individually movable parallel to a common vertical axis in a vertical direction and each gripper is individually movable in a radial direction from the common vertical axis, and multiple grippers project in a different radial direction from the common vertical axis, and all grippers are rotatable together and/or simultaneously about the common vertical axis, wherein the at least one carrier picking location, the at least one carrier loading location and the at least one carrier deposition location surround the common vertical axis of rotation, and a controller, for controlling movement the grippers, in particular each subsequently along the carrier picking location, the carrier loading location and the carrier deposition location.

By suspending all grippers on a common axis of rotation, a compact system is obtained. At least one carrier picking location carrier loading location and carrier deposition location surround the common vertical axis of rotation, but multiple ones are thinkable too, and in fact, make the system even more effective, since a single vertical axis can easily be surrounded by multiple locations within the space that would normally be occupied for a single carrier handler according to the state of the art. Even further scaling up is possible, be it with an acceptable concession to the absolute footprint. The vertical axis with the grippers serves as a carousel, which leads all grippers for the carriers along the various locations subsequently. The carousel construction allows a single motor or drive, a minimum of bearings and cabling. Most important however is that the system allows to use multiple carrier depositing locations, which can act as a buffer, which allows to use the system according to the present invention in continuous production lines, and to compensate for irregularities in the rest of the dough line. Additionally, it makes the logistics of providing and removing carriers less time critical, because they can be buffered.

The values of the different radial directions in which the grippers project may preferably have a common denominator larger than 5 degrees and preferably have a common denominator of 15, 30, 45, 60, 90 or 120 degrees with respect to a first reference angle defined as zero. In other words, they are all at the same angular displacement from each other, possibly skipping one or more positions, if it is not necessary to maximize the number of grippers. The same then goes for the at least one carrier picking location, the at least one carrier loading location and the at least one carrier deposition location: they may preferably surround the common vertical axis of rotation under mutual angles differing with the same common denominator with respect to a second reference angle defined as zero.

In an optimal situation, there are a number N locations, equally distributed around the vertical axis, mutually spaced 360/N degrees, and there is the same number of grippers, at the same mutual spacing of 360/N degrees.

With that choice, one gripper being lined-out with a location means that all grippers are ligned out with a location, and by rotating the common vertical axis over 360/N degrees, all grippers arrive at a next location.

Therein, it is possible that at least one carrier picking location and at least one carrier deposition location are the same location. That means that carriers are picked from a location, provided with dough pieces and returned to the same location. Such location may be configured for receiving a rack for stacking carriers, specifically a displaceable rack with wheels. The carrier picking location and carrier deposition location may in general be configured for receiving a rack for stacking carriers, preferably displaceable racks with wheels.

The at least one carrier loading location, comprises a conveyor belt, in particular provided with a reciprocate-retract system having a movable nose bar, for loading a picked carrier with dough pieces. In such case, a carrier can be placed below the reciprocate-retract system, and receive dough pieces.

It is thinkable that the dough pieces are provided in a number of lanes that is too small to fill the entire carrier in one run. For that purpose, at least one gripper may further be movable in a horizontal direction perpendicular to its radial direction with respect to the common vertical axis. After a first run of the reciprocate-retract system, a second run can be made with a shift of the carrier over the distance of a number of lanes of dough pieces.

Besides a carrier picking location, a carrier loading location and a carrier deposition location, the device according to the invention may further comprise a dough processing device, located around the common vertical axis of rotation, for performing a processing step, such as a decoration, moistening, scoring or strewing step on the dough products on a carrier, or a cleaning step of the carriers.

The controller may be configured for rotating the common vertical axis and the grippers when a carrier is filled with dough products, and in particular be configured for rotating the common vertical axis over an angle with a common denominator larger than 5 degrees and preferably 15, 30, 45, 60, 90 or 120 degrees, in particular an angle that corresponds to the smallest angle between two adjacent grippers.

The controller may further be configured to deposit carriers with dough products at a carrier depositing location in a top-down sequence, starting with a highest position and ending with a lowest position.

The invention will be elucidated into more detail with reference to the following figure, wherein:
- Figure 1 shows a perspective top view of a device according to the present invention; and
- Figure 2 shows a schematic overview of carrier movement at a carrier loading location.

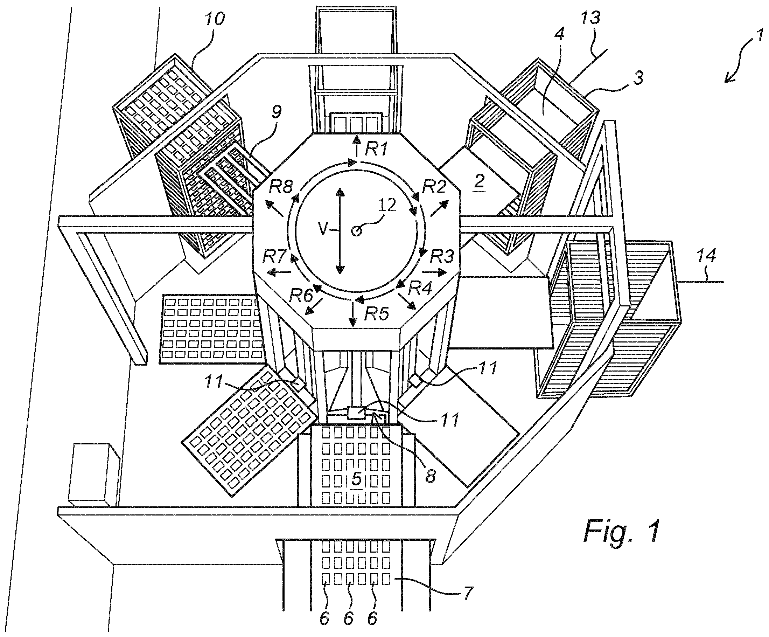

Figure 1 shows a perspective top view of a device 1 according to the present invention, comprising a carrier picking location 2, for positioning empty carriers 4 to be picked. In this embodiments, the carriers are placed on a movable rack 3, in which they are stacked. The device further comprises a carrier loading location 5, for loading a picked carrier 4 with dough pieces 6. The dough pieces are provided by a conveyor belt 7, provided with a reciprocate-retract system 8 for depositing the dough pieces on a carrier 4 that is placed below the conveyor 7 level. The device further comprises a carrier deposition location, comprising a second movable rack 10 , for depositing carriers 4 loaded with dough pieces 6. The device has a number of movable grippers 11 for picking, moving and depositing carriers 4, wherein each gripper is individually movable along a common vertical axis 12 in a vertical direction v, and each gripper is individually movable in a radial direction R1, R2, R3, R4, R5, R6, R7, R8 from the common vertical axis 12. The radial directions R1, R2, R3, R4, R5, R6, R7, R8 are all different and in the embodiment shown all at a same angular rotation from each other. All grippers 11 are rotatable together and/or simultaneously about the common vertical axis 12 and the carrier picking location 3, the carrier loading location 7 and the carrier deposition location 9 surround the common vertical axis of rotation 12. During use, the grippers are moved, in particular each subsequently along the carrier picking location 3, the carrier loading location 7 and the carrier deposition location 9.

In the embodiment shown in figure 1, the values of the different radial directions R1, R2, R3, R4, R5, R6, R7, R8 in which the grippers 11 project have a common denominator of 45 degrees with respect to a first reference angle 13 defined as zero and the at least one carrier picking location, the at least one carrier loading location 5 and the at least one carrier deposition location 9 are surrounding the common vertical axis of rotation 12 under mutual angles differing with the same common denominator of 45 degrees with respect to a second reference angle 14 defined as zero.

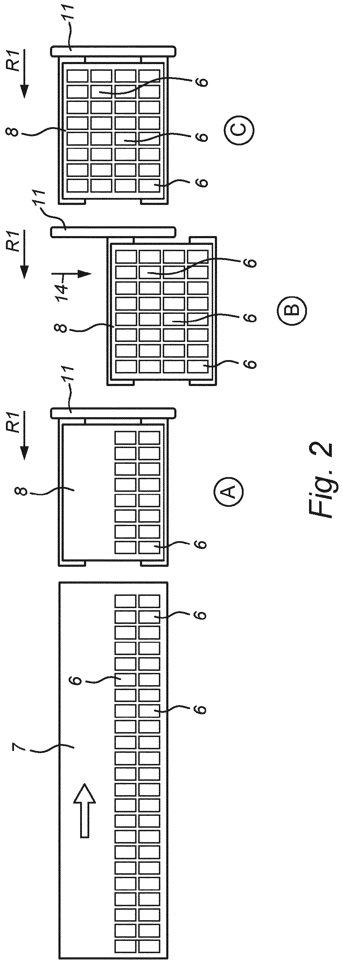

Figure 2 shows a schematic overview of carrier 4 movement at a carrier loading location 5, which may form part of the device 1 from figure 1. The gripper 11 is further movable in a horizontal direction 14 perpendicular to its radial direction R1 with respect to the common vertical axis. The figure shows three steps. In step A, the carrier 4 is aligned with the conveyor 7, on which dough products 6 are arranged. The dough products 6 are placed in two lanes, which are smaller than the available area on the carrier 4. As a result, the carrier 4 is only filled half. Therefore, while the reciprocate-retract system retracts, the carrier 4 is moved in a direction 14 perpendicular to the radial direction R1 with respect to the common vertical axis 12. Step B shows the result after a second loading run. After that, the carrier 4 is moved back to its initial orientation, and all carriers may be rotated simultaneously around the common vertical axis 12.

## Claims

1. Transshipment device (1) for dough pieces, comprising:
- At least one carrier picking location (2), for positioning empty carriers (4) to be picked;
- At least one carrier loading location (5), for loading a picked carrier (4) with dough pieces;
- At least one carrier deposition location (9), for depositing a carrier (4) loaded with dough pieces;
- A number of movable grippers (11) for picking, moving and depositing carriers (4), wherein:
∘ each gripper (11) is individually movable parallel to a common vertical axis (12) in a vertical direction;
∘ each gripper (11) is individually movable in a radial direction from the common vertical axis (12);
∘ multiple grippers (11) project in a different radial direction from the common vertical axis (12);
∘ all grippers (11) are rotatable together and/or simultaneously about the common vertical axis (12);
wherein
- the at least one carrier picking location (2), the at least one carrier loading location (5) and the at least one carrier deposition location (9) surround the common vertical axis of rotation (12);
- a controller, for controlling movement the grippers (11), in particular each subsequently along the carrier picking location (2), the carrier loading location (5) and the carrier deposition location (9).

2. Device according to claim 1, wherein
- the values of the different radial directions in which the grippers (11) project have a common denominator larger than 5 degrees and preferably 15, 30, 45, 60, 90 or 120 degrees with respect to a first reference angle defined as zero; and wherein
- the at least one carrier picking location (2), the at least one carrier loading location (5) and the at least one carrier deposition location (9) are surrounding the common vertical axis (12) of rotation under mutual angles differing with the same common denominator with respect to a second reference angle defined as zero.

3. Device according to any of the preceding claims, wherein at least one carrier picking location (2) unloading and at least one carrier deposition location (9) are the same location.

4. Device according to any of the preceding claims, wherein the least one carrier picking location (2), is configured for receiving a rack for stacking carriers (4).

5. Device according to any of the preceding claims, wherein the at least one carrier loading location (5), comprises a conveyor belt (7), in particular provided with a reciprocate-retract system (8) for loading a picked carrier with dough pieces.

6. Device according to any of the preceding claims, wherein the at least one carrier deposition location (9), is configured for receiving a rack for stacking carriers (4).

7. Device according to any of the preceding claims, comprising a dough processing device, located around the common vertical axis of rotation (12), for performing a processing step, such as a decoration, moistening, scoring or strewing step on the dough products on a carrier (4), or a cleaning step of the carriers (4).

8. Device according to any of the preceding claims, wherein at least one gripper (11) is further movable in a horizontal direction perpendicular to its radial direction with respect to the common vertical axis (12).

9. Device according to any of the preceding claims, wherein the controller is configured for rotating the common vertical axis (12) and the grippers (11) when a carrier (4) is filled with dough products.

10. Device according to claim 9, wherein the controller is configured for rotating the common vertical axis (12) over an angle with a common denominator larger than 5 degrees and preferably 15, 30, 45, 60, 90 or 120 degrees, in particular an angle that corresponds to the smallest angle between two adjacent grippers (11).

11. Device according to any of the preceding claims, wherein the controller is configured to deposit carriers (4) with dough products at a carrier depositing location (9) in a top-down sequence, starting with a highest position and ending with a lowest position.

## Patentansprüche

1. Umladungsvorrichtung (1) für Teiglinge, umfassend:
- mindestens eine Trägeraufnahmestelle (2) zum Positionieren von aufzunehmenden leeren Trägern (4);
- mindestens eine Trägerbeladestelle (5) zum Beladen eines aufgenommenen Trägers (4) mit Teiglingen;
- mindestens eine Trägerabsetzstelle (9) zum Absetzen eines mit Teiglingen beladenen Trägers (4);
- eine Anzahl beweglicher Greifer (11) zum Aufnehmen, Bewegen und Absetzen von Trägern (4), wobei:
o jeder Greifer (11) einzeln parallel zu einer gemeinsamen vertikalen Achse (12) in einer vertikalen Richtung bewegbar ist;
o jeder Greifer (11) einzeln in radialer Richtung von der gemeinsamen vertikalen Achse (12) bewegbar ist;
o mehrere Greifer (11) in unterschiedlicher radialer Richtung von der gemeinsamen vertikalen Achse (12) vorstehen;
o alle Greifer (11) gemeinsam und/oder gleichzeitig um die gemeinsame vertikale
Achse (12) drehbar sind;
wobei
- die mindestens eine Trägeraufnahmestelle (2), die mindestens eine Trägerbeladestelle (5) und die mindestens eine Trägerabsetzstelle (9) die gemeinsame vertikale Drehachse (12) umgeben;
- eine Steuerung zum Steuern der Bewegung der Greifer (11), insbesondere jeweils nacheinander entlang der Trägeraufnahmestelle (2), der Trägerbeladestelle (5) und der Trägerabsetzstelle (9).

2. Vorrichtung nach Anspruch 1, wobei
- die Werte der unterschiedlichen radialen Richtungen, in die die Greifer (11) vorstehen, einen gemeinsamen Nenner haben, der größer als 5 Grad ist, und vorzugsweise 15, 30, 45, 60, 90 oder 120 Grad in Bezug auf einen als Null definierten ersten Referenzwinkel betragen; und wobei
- die mindestens eine Trägeraufnahmestelle (2), die mindestens eine Trägerbeladestelle (5) und die mindestens eine Trägerabsetzstelle (9) die gemeinsame vertikale Drehachse (12) unter gegenseitigen Winkeln umgeben, die sich bezogen auf einen zweiten Referenzwinkel, der als Null definiert ist, mit dem gleichen gemeinsamen Nenner voneinander unterscheiden.

3. Vorrichtung nach einem der vorhergehenden Ansprüche, wobei mindestens eine Trägeraufnahmestelle (2) entladend und mindestens eine Trägerabsetzstelle (9) dieselbe Stelle sind.

4. Vorrichtung nach einem der vorhergehenden Ansprüche, wobei die mindestens eine Trägeraufnahmestelle (2) zum Empfangen eines Regals zum Stapeln von Trägern (4) konfiguriert ist.

5. Vorrichtung nach einem der vorhergehenden Ansprüche, wobei die mindestens eine Trägerbeladestelle (5) ein Förderband (7) umfasst, das insbesondere mit einem hin- und hergehenden Einzugssystem (8) zum Beladen eines aufgenommenen Trägers mit Teiglingen versehen ist.

6. Vorrichtung nach einem der vorhergehenden Ansprüche, wobei die mindestens eine Trägerabsetzstelle (9) zum Empfangen eines Regals zum Stapeln von Trägern (4) konfiguriert ist.

7. Vorrichtung nach einem der vorhergehenden Ansprüche, umfassend eine um die gemeinsame vertikale Drehachse (12) angeordnete Teigverarbeitungsvorrichtung zum Durchführen eines Verarbeitungsschritts, wie beispielsweise eines Dekorations-, Befeuchtungs-, Ritz- oder Streuschritts, an den Teigprodukten auf einem Träger (4) oder eines Reinigungsschritts der Träger (4).

8. Vorrichtung nach einem der vorhergehenden Ansprüche, wobei mindestens ein Greifer (11) ferner in einer horizontalen Richtung senkrecht zu seiner radialen Richtung in Bezug auf die gemeinsame vertikale Achse (12) bewegbar ist.

9. Vorrichtung nach einem der vorhergehenden Ansprüche, wobei die Steuerung zum Drehen der gemeinsamen vertikalen Achse (12) und der Greifer (11) konfiguriert ist, wenn ein Träger (4) mit Teigprodukten gefüllt ist.

10. Vorrichtung nach Anspruch 9, wobei die Steuerung zum Drehen der gemeinsamen vertikalen Achse (12) um einen Winkel mit einem gemeinsamen Nenner größer als 5 Grad und vorzugsweise um 15, 30, 45, 60, 90 oder 120 Grad, insbesondere um einen Winkel, der dem kleinsten Winkel zwischen zwei benachbarten Greifern (11) entspricht, konfiguriert ist.

11. Vorrichtung nach einem der vorhergehenden Ansprüche, wobei die Steuerung zum Absetzen der Träger (4) mit Teigprodukten an einer Trägerabsetzstelle (9) in einer Sequenz von oben nach unten, beginnend mit einer höchsten Position und endend mit einer niedrigsten Position, konfiguriert ist.

## Revendications

1. Dispositif de transbordement (1) de pâtons, comprenant :
- au moins un emplacement de prélèvement de supports (2), pour positionner des supports (4) vides à prélever ;
- au moins un emplacement de chargement de support (5), pour charger un support (4) prélevé avec des pâtons ;
- au moins un emplacement de dépôt de support (9), pour déposer un support (4) chargé de pâtons ;
- un certain nombre de pinces mobiles (11) pour prélever, déplacer et déposer des supports (4), dans lequel :
∘ chaque pince (11) est individuellement mobile parallèlement à un axe vertical commun (12) dans une direction verticale ;
∘ chaque pince (11) est mobile individuellement dans une direction radiale à partir de l'axe vertical commun (12) ;
∘ plusieurs pinces (11) font saillie dans une direction radiale différente de l'axe vertical commun (12) ;
∘ toutes les pinces (11) peuvent tourner ensemble et/ou simultanément autour de l'axe vertical commun (12) ;
dans lequel
- l'au moins un emplacement de prélèvement de supports (2), l'au moins un emplacement de chargement de support (5) et l'au moins un emplacement de dépôt de support (9) entourent l'axe de rotation vertical commun (12) ;
- un dispositif de commande, pour commander le mouvement des pinces (11), en particulier chacune successivement le long de l'emplacement de prélèvement de supports (2), de l'emplacement de chargement de support (5) et de l'emplacement de dépôt de support (9).

2. Dispositif selon la revendication 1, dans lequel
- les valeurs des différentes directions radiales dans lesquelles les pinces (11) font saillie ont un dénominateur commun supérieur à 5 degrés et de préférence 15, 30, 45, 60, 90 ou 120 degrés par rapport à un premier angle de référence défini comme nul ; et dans lequel
- l'au moins un emplacement de prélèvement de supports (2), l'au moins un emplacement de chargement de support (5) et l'au moins un emplacement de dépôt de support (9) entourent l'axe de rotation vertical commun (12) à des angles mutuels différents du même dénominateur commun par rapport à un second angle de référence défini comme nul.

3. Dispositif selon l'une quelconque des revendications précédentes, dans lequel au moins un emplacement de prélèvement de supports (2) de déchargement et au moins un emplacement de dépôt de support (9) sont au même emplacement.

4. Dispositif selon l'une quelconque des revendications précédentes, dans lequel l'au moins un emplacement de prélèvement de supports (2) est configuré pour recevoir un râtelier pour empiler des supports (4).

5. Dispositif selon l'une quelconque des revendications précédentes, dans lequel l'au moins un emplacement de chargement de support (5) comprend un convoyeur à bande (7), en particulier muni d'un système de va-et-vient (8) pour charger un support prélevé avec des pâtons.

6. Dispositif selon l'une quelconque des revendications précédentes, dans lequel l'au moins un emplacement de dépôt de support (9) est configuré pour recevoir un râtelier pour empiler des supports (4).

7. Dispositif selon l'une quelconque des revendications précédentes, comprenant un dispositif de traitement de la pâte, situé autour de l'axe de rotation vertical commun (12), pour effectuer une étape de traitement, telle qu'une étape de décoration, d'humidification, de scarification ou d'étalement des produits de pâte sur un support (4), ou une étape de nettoyage des supports (4).

8. Dispositif selon l'une quelconque des revendications précédentes, dans lequel au moins une pince (11) est en outre mobile dans une direction horizontale perpendiculaire à sa direction radiale par rapport à l'axe vertical commun (12).

9. Dispositif selon l'une quelconque des revendications précédentes, dans lequel le dispositif de commande est configuré pour faire tourner l'axe vertical commun (12) et les pinces (11) lorsqu'un support (4) est rempli de produits de pâte.

10. Dispositif selon la revendication 9, dans lequel le dispositif de commande est configuré pour faire tourner l'axe vertical commun (12) sur un angle avec un dénominateur commun supérieur à 5 degrés et de préférence 15, 30, 45, 60, 90 ou 120 degrés, en particulier un angle qui correspond au plus petit angle entre deux pinces adjacentes (11).

11. Dispositif selon l'une quelconque des revendications précédentes, dans lequel le dispositif de commande est configuré pour déposer des supports (4) avec des produits de pâte à un emplacement de dépôt de support (9) dans une séquence descendante, commençant par une position la plus élevée et se terminant par une position la plus basse.
